# EUROPEAN PATENT APPLICATION

(11) **EP 1 944 714 A1**
(43) Date of publication of application: **16.07.2008**
(21) Application number: 07000412.2
(22) Date of filing: 10.01.2007
(51) Int. Cl.: G06F 21/20

(54) **Method and systems for providing the authenticity of a client to a server**

(71) Applicant: Jaycrypto Limited, Hornchurch RM11 2QB (GB)
(72) Inventor: Busari Jay, Bangkok 10500 (TH)
(74) Representative: Peterreins, Frank

(57) **Abstract**

The present invention relates to a method and systems for proving the authenticity of a client to a server and relates in particular to such methods for ensuring secure authentication of identities of multiple electronic devices using certificates. The method according to the invention includes that a server sends a first certificate and a second certificate of the server to the client as a sign up request, and that the client responds by sending at least a certificate of the client together with identifying information to the server, and that the server signs and issues the signed certificate of the client depending on the validity of the identifying information.

## Description

The present invention relates to a method and systems for proving the authenticity of a client to a server and relates in particular to such methods for ensuring secure authentication of identities of multiple electronic devices using certificates.

### Technical Background

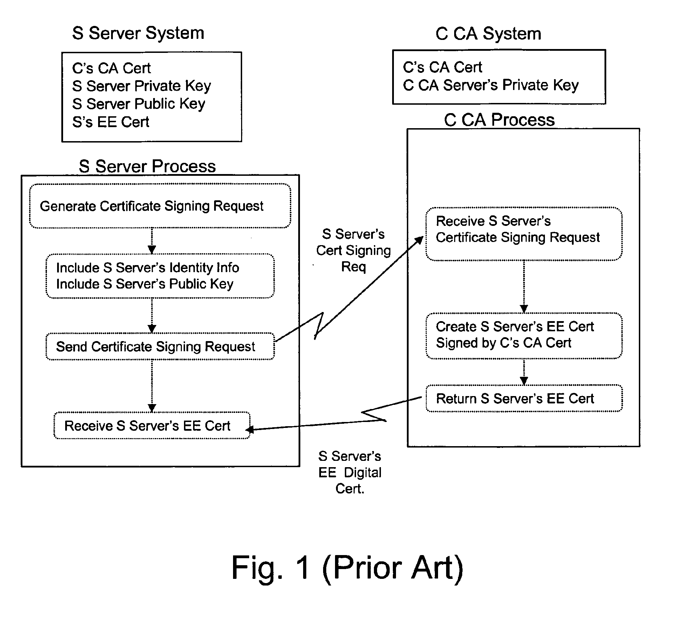

As shown in Fig. 1, it is common practice for web servers to request a digital certificate from a certificate authority. The certificate authority issues an End Entity certificate to the web server signed by the certificate authority. Subsequent uses of the web server's digital certificate can be verified using the certificate authority's digital certificate.

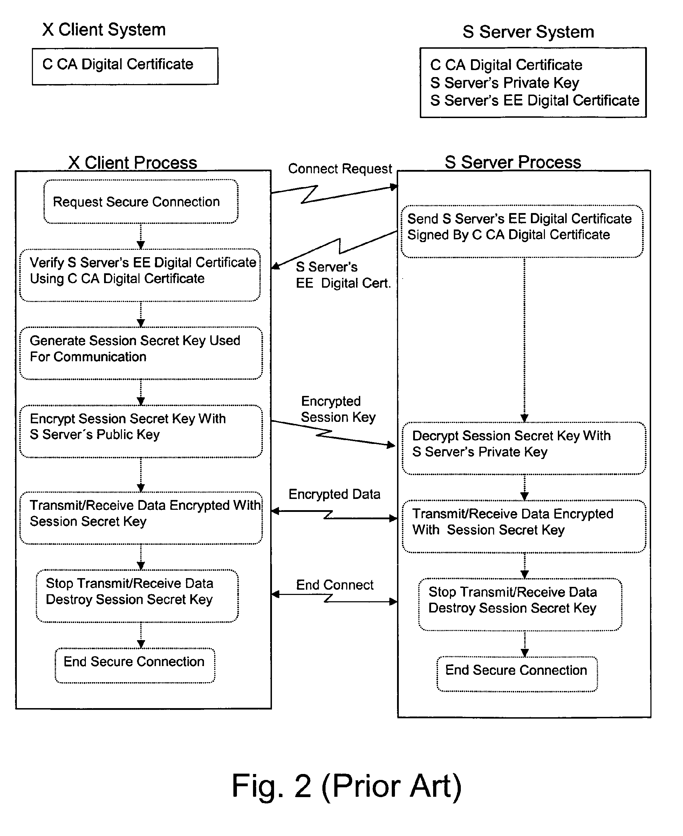

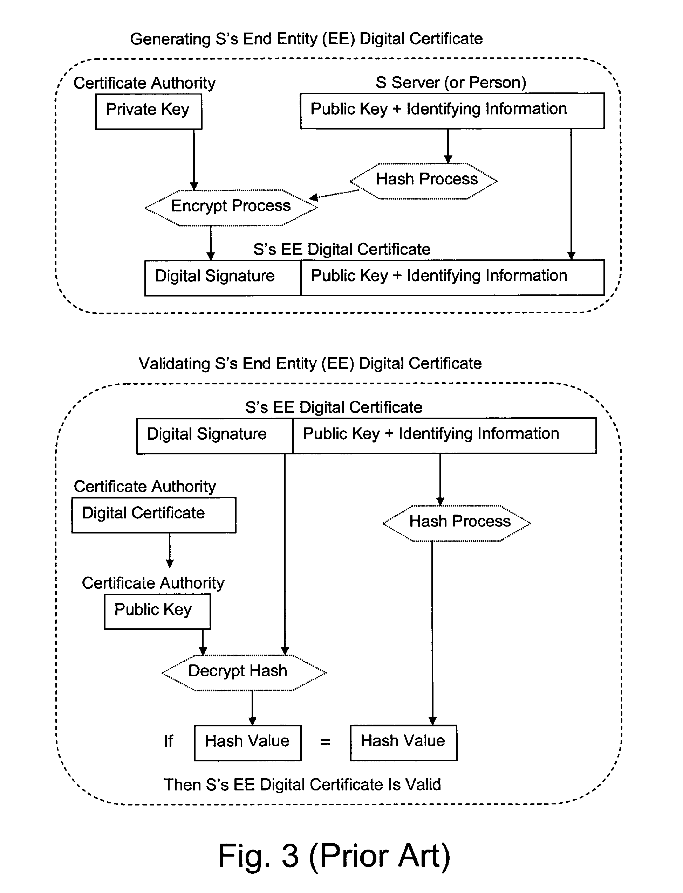

As shown in Fig. 2, it is common practice to use web server digital certificates to authenticate the identity of a web server to visiting browsers. A client web browser accesses the web server's digital certificate when entering a secure session. The web server's digital certificate is issued by a certificate authority (CA), the digital certificate containing the web server's public key, is used to authenticate the identity of the web server (as shown in Fig. 3a). The certificate provides the client web browser with the web server's public key, so that the client web browser can encrypt and send a (secret) session key to the web server, the (secret) session key is then used to encrypt data transmitted between the client web browser and the web server. Since only the web server has the private key to decrypt the session key supplied by the client web browser, the (secret) session key is only known to the client web browser and the web server. Any information transmitted between the client web browser and the web server remains secure since the information is encrypted with the exchanged (secret) session key. The web server certificate is issued by a certificate authority (CA). Most client web browsers are published and distributed with a number of CA's digital certificates, containing the CA's public key, installed as root certificates so that the client web browser will recognize the CA's signature as the issuer of the web server's certificate and trust the certificate.

The method shown in Fig. 2 is known for establishing the authenticity of a server to a client, however, this often has the limitation that the server must be online. This also requires that the client must share a different password with each server, which can be inconvenient and in certain instances may lead the client to use the same password with different servers.

There are also instances, where digital certificates are used to authenticate the identity of persons, computing or networking equipment in order to gain access to servers for different purposes. In such cases, the use of digital certificates would be similar to that described above, where client web browsers access a web server, except that there would be a possibility or need to mutually authenticate the server as well as the person or equipment requesting access.

In the instances described in the last paragraph, the server trusts that the public key belongs to the client. The server trusts that the client is in fact actively involved in the transaction because it is presumed that only the client knows the private key and can form valid digital signatures. The digital certificate issued by a certificate authority asserts to the server that the client's public key is a valid public key issued by or registered with the certificate authority. Assuming the server trusts the certification authority's public key, then it trusts the client's certificate, the client public key and ultimately the client's authenticity.

Some methods for client/server authentication using public key cryptography and digital certificates are described in US Patent No. 6,189,098.

The method shown in Fig. 3 is known for using a certificate authority to digitally sign and issue a digital identity certificate for a server or a person. Fig. 3 also shows a method known for validating the digital identity certificate for a server.

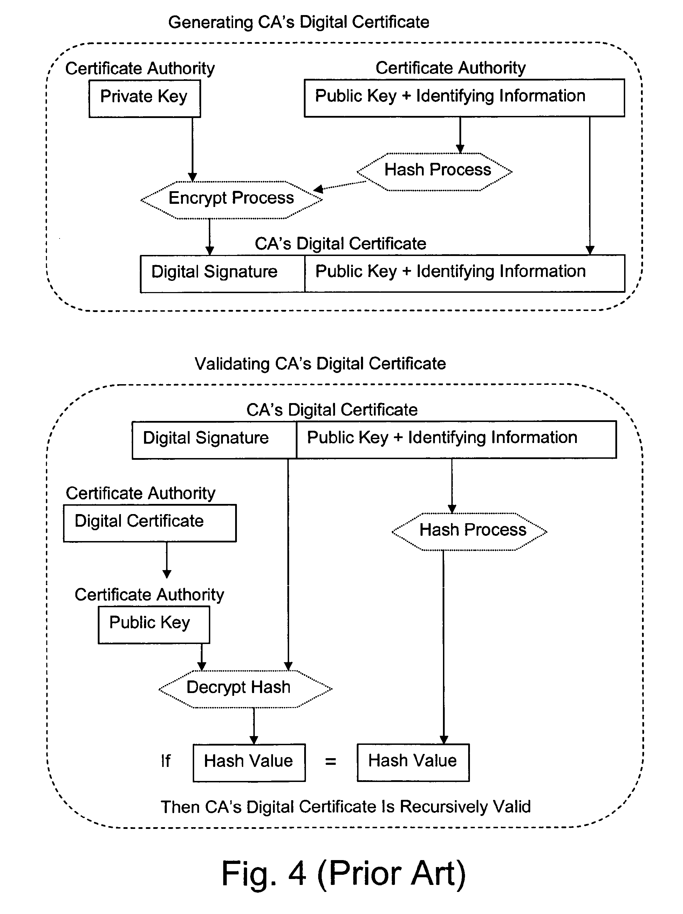

The method shown in Fig. 4 is known for generating a certificate authority's digital identity certificate. Fig. 4 also shows that the certificate authority's digital identity certificate is recursively validated by the certificate authority.

### Summary of the Invention

In view of the above mentioned prior art, the present invention has the object to provide an improved method and systems for proving the authenticity of a client to a server.

The above object is achieved according to the present invention by the method of claim 1 and the systems of claims 14, 16 and 17. Preferred embodiments are described in the dependent claims.

The aspects, features and advantages of the present invention can be understood better according to the following description with reference to the accompanying drawings. The following are preferred embodiments of the present invention. It should be apparent to those skilled in the art that the foregoing is illustrative only and the invention can be embodied in a wide variety of forms, some of which may be quite different from the disclosed embodiments. All the features disclosed in this description may be replaced by alternative features serving the same purpose, and equivalent or similar purpose, unless expressly stated otherwise. Therefore, numerous other embodiments or modifications are contemplated as falling within the scope of the present invention as defined in the claims. Use of absolute terms, such as "will not", "will", "shall", "shall not", "must" and "must not" are not meant to limit the present invention as the embodiments disclosed herein are merely exemplary.

The following description will be presented using terminology commonly employed by those skilled in the art to convey the substance of their work to others skilled in the art. Also, the following description will be presented in terms of operations performed through the execution of programming instructions. As well understood by those skilled in the art, these operations often take the form of electrical, magnetic, optical or wireless signals capable of being stored, transferred, combined, and otherwise manipulated through, for instance, electrical components.

The present invention provides a method for proving the authenticity of a client to at least one server, comprising the steps of:
a) the server sends a first certificate and a second certificate of the server to the client as a sign up request, and
b) the client responds by sending at least a certificate of the client together with identifying information to the server,
c) the server signs and issues the signed certificate of the client depending on the validity of the identifying information.

According to the present invention, the first certificate of the server can contain information specifying which services the server offers to the client. The second certificate of the server can contain information for the encryption of the communication between server and client.

In a further embodiment, the first certificate of the server is a certificate of a certificate authority and the second certificate of the server is an end entity certificate.

Preferably, the client has at least a pre-installed certificate which acts as a root to prove the authenticity of the server to the client.

Advantageously, the pre-installed certificate in the client specifies operations which are of interest to the client when applying for a service to the server. The client will then only apply for the operations he is interested in. This means that the pre-installed certificate functions to filter out those operations which are of value to the client, e.g. because of hardware or software restrictions.

The operations specified by the pre-installed certificate in the client include among others: a confirm operation to perform RSA 1024 bit with SHA-1 digital signing or to perform equivalent combinations of cryptographic operations, and/or a buy operation to perform AES 256 bit encryption with AES key-wrap using RSA 1024 bit encryption in addition to RSA 1024 bit with SHA-1 digital signing or to perform equivalent combinations of cryptographic operations, and/or a transfer operation to perform AES 256 bit encryption with AES key-wrap using RSA 2048 bit encryption in addition to RSA 1024 bit with SHA-256 digital signing or to perform equivalent combinations of cryptographic operations, and/or a query operation to perform RSA 1024 bit with SHA-256 digital signing or to perform equivalent combinations of cryptographic operations, and/or some service specific operation performed using combinations of cryptographic operations.

The certificate of the client signed by the server in step c) can be pseudonymous or anonymous or identity revealing for the client.

In another embodiment the server possesses at least a first own certificate and a second own certificate. Accordingly, the client uses different own certificates to prove its authenticity for different services provided by one server and/or the client uses different own certificates to prove its authenticity to different servers. It is also possible that the client uses different own certificates for anonymous, pseudonymous and identity revealing communication.

Preferably, the client and the server use a personal area network to prove the authenticity of the client to the server, wherein the personal area network can be chosen from the groups of wireless or wired personal area networks including Bluetooth, infrared, RS-232, USB, FireWire.

The present invention also provides a system for proving the authenticity of a client to at least one server, comprising at least one client and one server and a network connecting the client and the server, wherein the system uses a method for proving the authenticity of a client to at least one server according to the present invention. The server may comprise a certificate authority sub-system.

Next, the present invention provides a client system including a certificate storage and retrieval part, wherein the client system uses a method according to the present invention.

Additionally, the present invention provides a server system including a certificate storage and retrieval part and a certificate authority sub-system, wherein the server system uses the method according to the present invention.

The invention allows client systems to use each digital certificate and each public key for subscriptions to a variable number of servers. The invention facilitates maintenance of trust relationships that remain persistent to allow asynchronous exchange of information without the need for being online or connected sessions.

The invention allows client systems to use the same public key with different servers capable of acting as their own certificate authorities, in order to obtain various digital certificates containing information deemed identifying, pseudonymous or anonymous.

The invention allows client systems to use each digital certificate and/or each public key for unsubscribed but authenticated exchange of information with new servers.

The invention allows client systems to use the same public key with different certificate authorities in order to obtain various digital certificates containing information deemed identifying, pseudonymous or anonymous.

The invention allows client systems to use each public key with servers that are affiliated, with their own certificate authorities, in order to obtain various digital certificates containing information deemed identifying, pseudonymous or anonymous.

The invention allows server systems to accept different digital certificates from the same client regardless of whether the client reveals its identity, uses a pseudonym or anonymously when authenticating.

The invention prevents different servers from sharing any information, any identifying information or even passwords about the clients they may have in common.

The invention allows integration of known methods for certificate authorities to act as the identity trust brokers for all clients and servers involved in any exchange of information.

The invention allows servers to act as the identity trust brokers for clients of their own services.

The invention allows client systems to communicate with servers using more context sensitive operations, instead of just the cryptographic operations like encrypt or digitally sign, each of which would be combinations of the cryptographic operations using different key sizes and algorithms.

The invention allows client systems to send certificate signing requests, for access to servers, without the pre-requisite for being online or connected.

The following is a description of how the invention applies to identification, processing and issuance of digital certificates. This is only one of the many potential systems, process flows and applications for the invention.

While the invention applies to the use of digital certificates that are verifiably identified, pseudonymous or anonymous, the invention is also interoperable with conventional use of digital certificates, where a CA is required to act as a middle man who verifies the authenticity of the identity of the holder of the digital certificate.

### Short Description of the Drawings

The invention will be understood more easily by referring, by way of example, to the accompanying drawings, in which
- Fig. 1: is a schematic diagram showing a known way for a web server to request a certificate from a certificate authority.
- Fig. 2: is a schematic diagram showing a known way of authentication of a server to a client.
- Fig. 3: is a schematic diagram showing a known way of generating and validating a digital identity certificate.
- Fig. 4: is a schematic diagram showing a known way of generating and validating a certificate authority's digital identity certificate.
- Fig. 5: is a schematic diagram showing specific parts of an electronic device according to the invention.
- Figs. 6a to 6c: are schematic diagrams showing a structure of a server system, a client system and an exchange of certificates according to the invention.
- Figs. 7a to 7c: are schematic diagrams showing a structure of a server system, a client system and an exchange of certificates according to the invention.
- Figs. 8a to 8c: are schematic diagrams showing a structure of a server system, a client system and an exchange of certificates according to the invention which provides interoperability with prior art.
- Figs. 9a to 9c: are schematic diagrams showing a structure of a server system, a client system and an exchange of certificates according to the invention which provides interoperability with prior art.

### Detailed Description of Preferred Embodiments

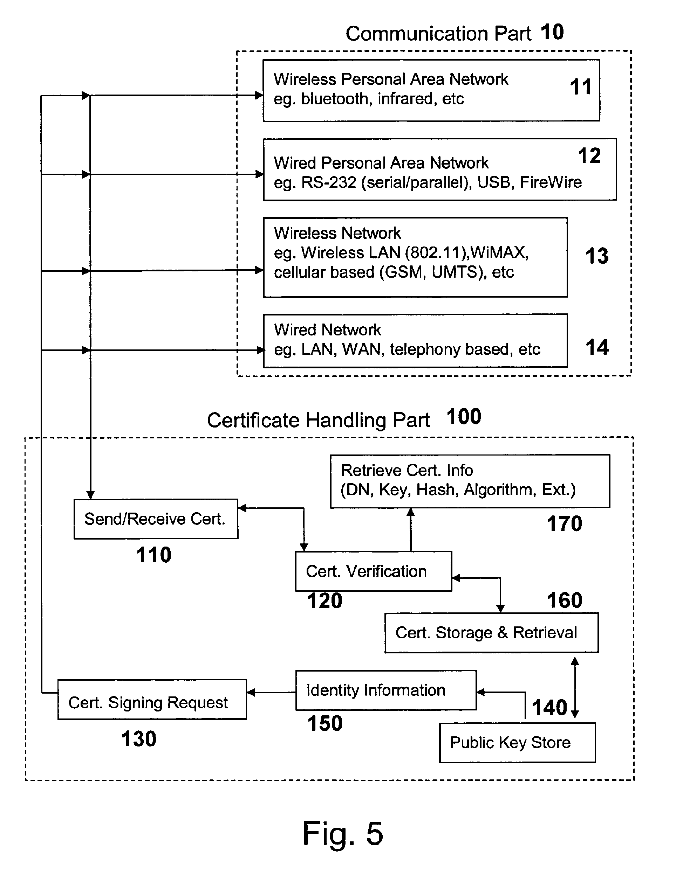

Figure 5 illustrates a diagram of a device in accordance with an embodiment of the present invention. A generic electronic apparatus for the purposes of exchanging digital certificates comprises a communication part 10 and a certificate handling part 100.

As shown in Fig. 5, the communication part 10 of a device in accordance with an embodiment of the present invention may include different media and methods. One of the communication media include wireless personal area network 11, which would include protocols like infrared or Bluetooth (IEEE 802.15), defined as personal due to their general limitation on distance for wireless transmission which ensures that the devices are operated to connect within each others' proximate physical presence. Another communication media is wired personal area network 12, which would include serial and parallel cables or USB or FireWire (IEEE 1394), defined as personal due to the limitation on distance for wired transmission which ensures that the devices are operated to connect within each others proximate physical presence. Another communication media is the wireless network 13, which would include wireless LAN (IEEE 802.11 or Wi-Fi) WiMax (IEEE 802.16) or cellular (GSM, UMTS) networks, defined as wireless networks due to the very nature of the transmission using different protocols over different radio frequencies within the spectrum allocated. The wired network 14 is a further communication media for the apparatus, which would include LAN (IEEE 802.3 or Ethernet, token ring), WAN (Internet, intranet, x.25) or telephony networks. The communication part 10 of an apparatus may include one or more of the mentioned communication media. Further references to wired personal area networks and wireless personal area networks will be referred to as personal area network. Further references in the description to wired networks and wireless networks will be referred to as network.

As shown in Fig. 5, the certificate handling part 100 of a device in accordance with an embodiment of the present invention may include several modules. The module 110 for sending and receiving digital certificates is the interface for the certificate handling part with the communication part 10 of the device. All digital certificates that are stored, sent or received are processed by the certificate verification module 120. A certificate signing request module 130 is shown as to illustrate performing digital certificate exchange. The certificate signing request is sent when a public key is accessed from the public key store 140 and combined with identity information 150 supplied by the holder of the device. All digital certificates are verified before retrieval or storage or accessing certificate information (such as Distinguished Name fields of the certificate holder and issuer, Public Key fields, Hash or fingerprint, or Algorithms for which the digital certificate may be used, etc.). Digital certificates are received and then stored in the storage and retrieval module 160. The certificate handling part 100 may also include a retrieve certificate information module 170.

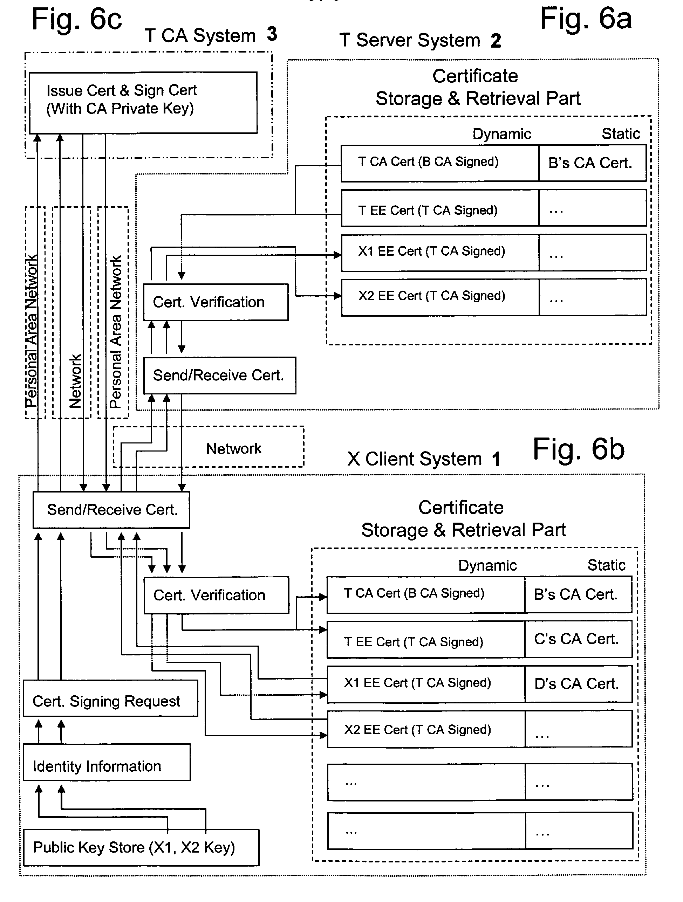

Figure 6a shows in the form of a diagram a T server system 2. The T server has a B CA digital certificate pre-installed, before start of operation, in its certificate storage and retrieval module. The T server system 2 acquires its affiliated T CA digital certificate from its T CA system 3 (Fig. 6c), where the T CA digital certificate has been issued and signed by B CA. The T server system 2 also acquires its own end entity digital certificate from its T CA system 3, where the T EE (end entity) digital certificate has been issued and signed by T CA. The T CA system 3 belongs to the T server 2, it can be physically integrated into the T server system 2 or it can be a separate entity. This allows servers to act as the identity trust brokers for clients of their own services. It also prevents different servers from sharing any information, any identifying information or even passwords, about the clients they may have in common.

Figure 6a shows in the form of a diagram the transfer of T CA Cert and T EE Cert from the T server system 2 as a preliminary step for requesting a client 1 to sign up for access to the server's services. Fig. 6b shows in the form of a diagram the T CA Cert and T EE Cert arriving at the X client system 1, where the digital certificates from T server system 2 are received by the Send/Receive Certificate module, verified by the Certificate Verification module, and then stored in the client system's certificate storage and retrieval module. The X client 1 has a B CA digital certificate pre-installed, along with C CA and D CA digital certificates before start of operation, in its certificate storage and retrieval module.

The pre-installed B CA digital certificate is used as a root to authenticate and validate the T server's digital certificates to the X client system 1. The pre-installed B CA digital certificate is also used to indicate some context sensitive operations for the client system 1 to communicate with the server system 2. As an example of some context sensitive operations, one of the operations may be 1a-belled "Confirm" to perform RSA 1024 bit with SHA-1 digital signing, another one of the operations may be labelled "Buy" to perform AES 256 bit encryption with AES key-wrap using RSA 1024 bit encryption in addition to RSA 1024 bit with SHA-1 digital signing, another one of the operations may be labelled "Transfer" to perform AES 256 bit encryption with AES key-wrap using RSA 2048 bit encryption in addition to RSA 1024 bit with SHA-256 digital signing, still another of the operations may be labelled "Query" to perform RSA 1024 bit with SHA-256 digital signing.

Figure 6b shows in the form of a diagram the subsequent response of X client system 1 after receiving T server system's digital certificates which are considered as a request to sign up for access to the server's services. The response of the X client system 1 need not be done while connected or online with the T server system 2. The X client system 1 may keep the sign up request to be acted upon at a later occasion considered convenient for the holder of the X client device 1. This facilitates maintenance of trust relationships that remain persistent to allow asynchronous exchange of information without the need for being online or connected sessions. This also allows client system 1 to use the same public key with different servers capable of acting as their own certificate authorities, in order to obtain various digital certificates containing information deemed identifying, pseudonymous or anonymous. This also allows server systems to accept different digital certificates from the same client 1 regardless of whether the client reveals its identity, uses a pseudonym or anonymously when authenticating.

The public key store of the X client system 1 may have multiple public keys to which the X client system 1 also holds corresponding private keys. In response to the sign up request from T server system 2, X client system 1 sends its X1 public key along with identity information as a certificate signing request to the T CA system 3 (Fig. 6c). The certificate signing request is sent using a personal area network connection, which requires that X client system 1 be within the physical proximity of the T CA system 3. This would permit the operator of the T CA system 3 to verify the identity of the holder of the X client system 1 using different methods, such as checking an identity card or a driver's license containing a photograph of the holder. This would also permit the T CA system 3 operator to record the holder's identifying information in a separate system or choose not to record such identifying information at all. This out of band verification of the holder's identifying information by the T CA operator would also permit the holder of the X client system 1 to leave out any identifying information in the certificate signing request, it would also permit the entering of pseudonymous information in the certificate signing request. In either case, the T CA system 3 would issue and sign an X1 end entity digital certificate which contains verified identifying information for X client system 1, or the T CA system 3 would issue and sign an X1 end entity digital certificate which is pseudonymous or anonymous for the X client system. This allows client systems to communicate with servers using more context sensitive operations, instead of just the cryptographic operations like encrypt or digitally sign, each of which would be combinations of the cryptographic operations using different key sizes and algorithms. The X1 end entity digital certificate will be stored in the X client system's certificate storage and retrieval module.

For X client system 1 to complete the sign up process for authenticated access to T server system 2, the X1 end entity digital certificate signed by T CA is sent to the T server system 2 and also stored within the device's certificate storage and retrieval module. This facilitates maintenance of trust relationships that remain persistent to allow asynchronous exchange of information without the need for being online or connected sessions. This allows client system 1 to use each public key with servers that are affiliated, with their own certificate authorities, in order to obtain various digital certificates containing information deemed identifying, pseudonymous or anonymous. This also allows server systems to accept different digital certificates from the same client regardless of whether the client reveals its identity, uses a pseudonym or anonymously when authenticating. The T server system 2 only needs to know that the X1 end entity digital certificate is trusted by its affiliated T CA system 3. Subsequent access by the X client system 1 to T server is based on authentication using the mutually exchanged X1 end entity and T end entity digital certificates. This allows servers to act as the identity trust brokers for clients of their own services. It also prevents different servers from sharing any information, any identifying information or even passwords, about the clients they may have in common.

Figure 6b shows in the form of a diagram the response of X client system 1 after receiving another request to sign up for access to T server's services with the same T server system's digital certificates. This allows client systems to use each digital certificate and each public key for subscriptions to a variable number of servers. This also allows client systems to use the same public key with different servers capable of acting as their own certificate authorities, in order to obtain various digital certificates containing information deemed identifying, pseudonymous or anonymous. This as well allows client systems to use the same public key with different certificate authorities in order to obtain various digital certificates containing information deemed identifying, pseudonymous or anonymous, while also allowing client systems to use each public key with servers that are affiliated, with their own certificate authorities, in order to obtain various digital certificates containing information deemed identifying, pseudonymous or anonymous. This time the response of X client system 1 can be to sign up using different credentials, by using another public key X2 to request a different digital certificate. The response of the X client system 1 need not be done while connected or online with the T server system 2. The X client system 1 may keep the sign up request to be acted upon at a later occasion considered convenient for the holder of the X client device 1.

The public key store of the X client system 1 may have multiple public keys to which the X client system 1 also holds corresponding private keys. In response to the sign up request from T server system 2, X client system 1 sends its X2 public key along with identity information as a certificate signing request to the T CA system 3 (Fig. 6c). The certificate signing request is sent using a network connection. This would require the operator of the T CA system 3 to verify the identity of the holder of the X client system 1 using different methods, such as making a phone call or sending a message (sms or mms to their mobile phone, an electronic mail or even standard postal service mail). This would also permit the T CA system operator to record the holder's identifying information in a separate system or choose not to record such identifying information at all. This out of band verification of the holder's identifying information by the T CA operator would depend on the certificate authority's policy. The certificate authority's policy would also specify if it is permissible for the holder of the X client system 1 to leave out any identifying information in the certificate signing request, the policy would also specify if it is permissible to enter pseudonymous information in the certificate signing request. In either case, the T CA system 3 would issue and sign an X2 end entity digital certificate which contains verified identifying information for the X client system, or the T CA system 3 would issue and sign an X2 end entity digital certificate which is pseudonymous or anonymous for the X client system. The X2 end entity digital certificate will be stored in the X client system's certificate storage and retrieval module.

For X client system 1 to complete the sign up process for authenticated access to T server system 2, the X2 end entity digital certificate signed by T CA is sent to the T server system 2 and also stored within the device's certificate storage and retrieval module. This facilitates maintenance of trust relationships that remain persistent to allow asynchronous exchange of information without the need for being online or connected sessions. This allows client systems to use each public key with servers that are affiliated, with their own certificate authorities, in order to obtain various digital certificates containing information deemed identifying, pseudonymous or anonymous. This also allows server systems to accept different digital certificates from the same client regardless of whether the client reveals its identity, uses a pseudonym or anonymously when authenticating. The T server system 2 only needs to know that the X2 end entity digital certificate is trusted by its affiliated T CA system 3. Subsequent access by the X client system 1 to T server is based on authentication using the X1 or X2 end entity digital certificate along with the T end entity digital certificate. This allows servers to act as the identity trust brokers for clients of their own services. It also prevents different servers from sharing any information, any identifying information or even passwords, about the clients they may have in common.

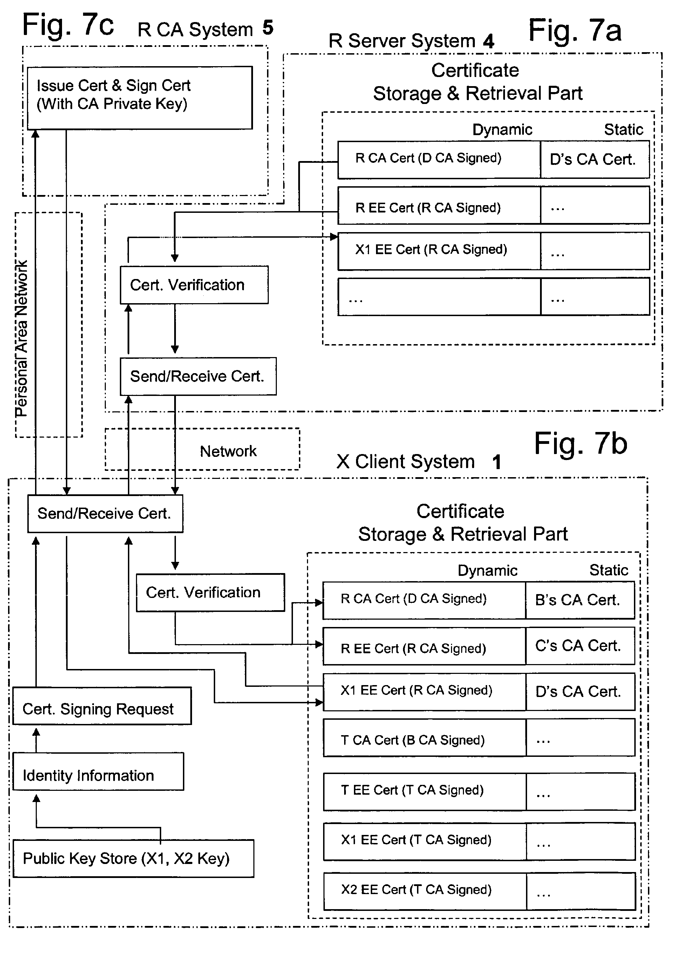

Figure 7a shows in the form of a diagram a R server system 4. The R server 4 has a D CA digital certificate pre-installed, before start of operation, in its certificate storage and retrieval module. The R server system 4 acquires its affiliated R CA digital certificate from R CA system 5 (Fig. 7c), where the R CA digital certificate has been issued and signed by D CA. The R server system 4 also acquires its own end entity digital certificate from its R CA system 5, where the R EE digital certificate has been issued and signed by R CA. This allows servers to act as the identity trust brokers for clients of their own services. It also prevents different servers from sharing any information, any identifying information or even passwords, about the clients they may have in common.

Fig. 7a, shows in the form of a diagram, the transfer of R CA Cert and R EE Cert from the R server system 4 as a preliminary step for requesting a client to sign up for access to the server's services. Fig. 7b shows in the form of a diagram the R CA Cert and R EE Cert arriving at the X client system 1, where the digital certificates from R server system 4 are received by the Send/Receive Certificate module, verified by the Certificate Verification module, and then stored in the client system's certificate storage and retrieval module. The X client 1 has a D CA digital certificate pre-installed, along with B CA and C CA digital certificates before start of operation, in its certificate storage and retrieval module. The X client 1 also has T CA digital certificate signed by B CA, T EE digital certificate signed by T CA, X1 EE digital certificate signed by T CA and X2 EE digital certificate signed by T CA from previous exchanges with T server system 2 (according to Figs. 6a, 6b and 6c).

The pre-installed D CA digital certificate is used as a root to authenticate and valid the R server's digital certificates to the X client system 1. The pre-installed D CA digital certificate is also used to indicate some context sensitive operations for the client system to communicate with the server system. As an example of some context sensitive operations, one of the operations may be labelled "Confirm" to perform RSA 1024 bit with SHA-1 digital signing, another one of the operations may be labelled "Buy" to perform AES 256 bit encryption with AES key-wrap using RSA 1024 bit encryption in addition to RSA 1024 bit with SHA-1 digital signing, another one of the operations may be labelled "Transfer" to perform AES 256 bit encryption with AES key-wrap using RSA 2048 bit encryption in addition to RSA 1024 bit with SHA-256 digital signing, still another of the operations may be labelled "Query" to perform RSA 1024 bit with SHA-256 digital signing.

Figure 7b shows in the form of a diagram the subsequent response of X client system 1 after receiving R server system's digital certificates which are considered as a request to sign up for access to the server's services. The response of the X client system 1 need not be done while connected or online with the R server system. The X client system may keep the sign up request to be acted upon at a later occasion considered convenient for the holder of the X client device 1. This facilitates maintenance of trust relationships that remain persistent to allow asynchronous exchange of information without the need for being online or connected sessions. This also allows client systems to use the same public key with different servers capable of acting as their own certificate authorities, in order to obtain various digital certificates containing information deemed identifying, pseudonymous or anonymous. This also allows server systems to accept different digital certificates from the same client regardless of whether the client reveals its identity, uses a pseudonym or anonymously when authenticating.

The public key store of the X client system 1 may have multiple public keys to which the X client system 1 also holds corresponding private keys. In response to the sign up request from R server system 4, X client system 1 sends its X1 public key along with identity information as a certificate signing request to the R CA system 5 (Fig. 7c). The certificate signing request is sent using a personal area network connection, which requires that X client system 1 be within the physical proximity of the R CA system 5. This would permit the operator of the R CA system 5 to verify the identity of the holder of the X client system 1 using different methods, such as checking an identity card or a driver's license containing a photograph of the holder. This would also permit the R CA system 5 operator to record the holder's identifying information in a separate system or choose not to record such identifying information at all. This out of band verification of the holder's identifying information by the R CA operator would also permit the holder of the X client system 1 to leave out any identifying information in the certificate signing request, it would also permit the entering of pseudonymous information in the certificate signing request. In either case, the R CA system 5 would issue and sign an X1 end entity digital certificate which contains verified identifying information for the X client system 1, or the R CA system 5 would issue and sign an X1 end entity digital certificate which is pseudonymous or anonymous for the X client system. The X1 end entity digital certificate, signed by R CA, will also be stored in the X client system's certificate storage and retrieval module.

For X client system 1 to complete the sign up process for authenticated access to R server system 4, the X1 end entity digital certificate signed by R CA is sent to the R server system 4 and also stored within the device's certificate storage and retrieval module. This facilitates maintenance of trust relationships that remain persistent to allow asynchronous exchange of information without the need for being online or connected sessions. This allows client systems to use each public key with servers that are affiliated, with their own certificate authorities, in order to obtain various digital certificates containing information deemed identifying, pseudonymous or anonymous. This also allows server systems to accept different digital certificates from the same client regardless of whether the client reveals its identity, uses a pseudonym or anonymously when authenticating. The R server system 4 only needs to know that the X1 end entity digital certificate is trusted by its affiliated R CA system 5. Subsequent access by the X client system 1 to the R server is based on authentication using the mutually exchanged X1 end entity and R end entity digital certificates. This allows servers to act as the identity trust brokers for clients of their own services. It also prevents different servers from sharing any information, any identifying information or even passwords, about the clients they may have in common.

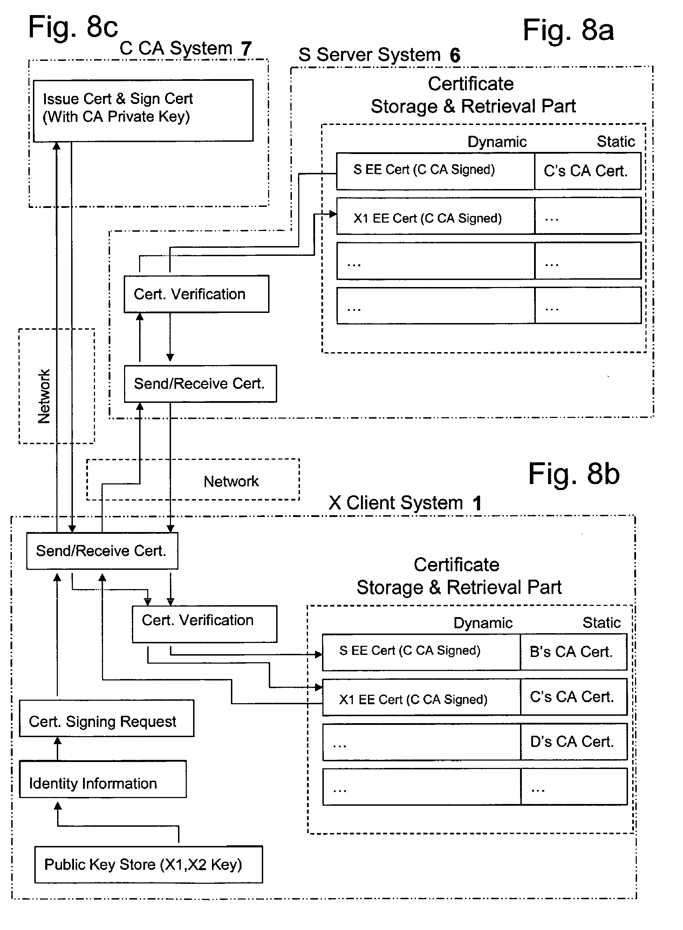

Figures 8a, 8b and 8c show the invention adapted to be compatible with known methods. Fig. 8a shows in the form of a diagram a S server system 6. The S server 6 has a C CA digital certificate pre-installed, before start of operation, in its certificate storage and retrieval module. The S server system 6 acquires its own end entity digital certificate from the C CA system 7 (Fig. 8c), where the S EE digital certificate has been issued and signed by C CA.

Figure 8a shows in the form of a diagram the transfer of S EE Cert from the S server system 6 as a preliminary step for requesting a client to sign up for access to the server's services. Fig. 8b shows in the form of a diagram the S EE Cert arriving at the X client system 1, where the digital certificate from S server system 6 is received by the Send/Receive Certificate module, verified by the Certificate Verification module, and then stored in the client system's certificate storage and retrieval module. The X client 1 has a C CA digital certificate pre-installed, along with B CA and D CA digital certificates before start of operation, in its certificate storage and retrieval module. The X client 1 may also have digital certificates stored from previous exchanges with T server system 2 (according to Figs. 6a, 6b and 6c) and R server system 4 (according to Figs. 7a, 7b and 7c).

The pre-installed C CA digital certificate is used as a root to authenticate and validate the S server's digital certificate to the X client system 1. The pre-installed C CA digital certificate is also used to indicate some context sensitive operations for the client system to communicate with the server system. As an example of some context sensitive operations, one of the operations may be labelled "Confirm" to perform RSA 1024 bit with SHA-1 digital signing, another one of the operations may be labelled "Buy" to perform AES 256 bit encryption with AES key-wrap using RSA 1024 bit encryption in addition to RSA 1024 bit with SHA-1 digital signing, another one of the operations may be labelled "Transfer" to perform AES 256 bit encryption with AES key-wrap using RSA 2048 bit encryption in addition to RSA 1024 bit with SHA-256 digital signing, still another of the operations may be labelled "Query" to perform RSA 1024 bit with SHA-256 digital signing.

Fig. 8b shows in the form of a diagram the subsequent response of X client system 1 after receiving S server system's digital certificate which is considered as a request to sign up for access to the server's services. The response of the X client system 1 need not be done while connected or online with the S server system 6. The X client system 1 may keep the sign up request to be acted upon at a later occasion considered convenient for the holder of the X client device 1. This facilitates maintenance of trust relationships that remain persistent to allow asynchronous exchange of information without the need for being online or connected sessions. This also allows client systems to use the same public key with different servers capable of acting as their own certificate authorities, in order to obtain various digital certificates containing information deemed identifying, pseudonymous or anonymous. This also allows server systems to accept different digital certificates from the same client regardless of whether the client reveals its identity, uses a pseudonym or anonymously when authenticating.

The public key store of the X client system 1 may have multiple public keys to which the X client system 1 also holds corresponding private keys. In response to the sign up request from S server system 6, X client system 1 sends its X1 public key along with identity information as a certificate signing request to the C CA system 7 (Fig. 8c). The certificate signing request is sent using a network connection. This would require the operator of the C CA system 7 to verify the identity of the holder of the X client system 1 using different methods, such as making a phone call or sending a message (sms or mms to their mobile phone, an electronic mail or even standard postal service mail). This would also permit the C CA system operator to record the holder's identifying information in a separate system or choose not to record such identifying information at all. This out of band verification of the holder's identifying information by the C CA operator would depend on the certificate authority's policy. The certificate authority's policy would also specify if it is permissible for the holder of the X client system 1 to leave out any identifying information in the certificate signing request, the policy would also specify if it is permissible to enter pseudonymous information in the certificate signing request. In either case, the C CA system 7 would issue and sign an X1 end entity digital certificate which contains verified identifying information for the X client system, or the C CA system 7 would issue and sign an X1 end entity digital certificate which is pseudonymous or anonymous for the X client system 1. The X1 end entity digital certificate will be stored in the X client system's certificate storage and retrieval module.

For X client system 1 to complete the sign up process for authenticated access to S server system 6, the X1 end entity digital certificate signed by C CA is sent to the S server system 6 and also stored within the device's certificate storage and retrieval module. This facilitates maintenance of trust relationships that remain persistent to allow asynchronous exchange of information without the need for being online or connected sessions. This allows client systems to use each public key with servers that are affiliated, with their own certificate authorities, in order to obtain various digital certificates containing information deemed identifying, pseudonymous or anonymous. This also allows server systems to accept different digital certificates from the same client regardless of whether the client reveals its identity, uses a pseudonym or anonymously when authenticating. The S server system only needs to know that the X1 end entity digital certificate is trusted by the C CA system 7. Subsequent access by the X client system 1 to S server 6 is based on authentication using the mutually exchanged X1 end entity and S end entity digital certificates. This allows servers to act as the identity trust brokers for clients of their own services. It also prevents different servers from sharing any information, any identifying information or even passwords, about the clients they may have in common.

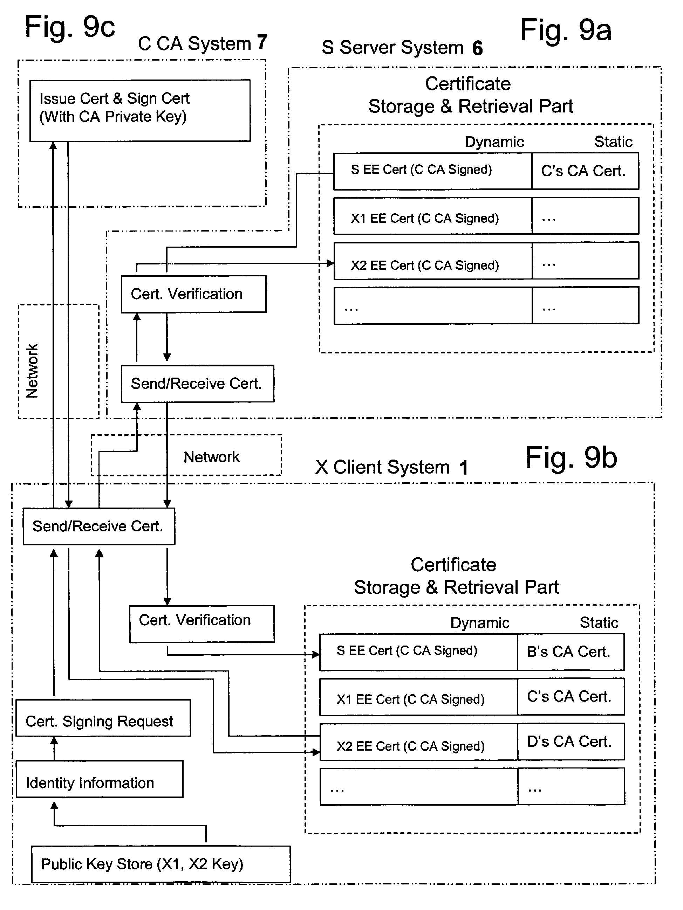

Figures 9a, 9b and 9c show the advantage of allowing the client to maintain multiple identities with the server. Fig. 9a shows in the form of a diagram a S server system 6. The S server 6 has a C CA digital certificate pre-installed, before start of operation, in its certificate storage and retrieval module. The S server system 6 acquires its own end entity digital certificate from the C CA system 7 (Fig. 9c), where the S EE digital certificate has been issued and signed by C CA.

Figure 9a shows in the form of a diagram the transfer of the S EE Cert from the S server system 6 as a preliminary step for requesting a client to sign up for access to the server's services. Fig. 8b shows in the form of a diagram the S EE Cert arriving at the X client system 1, where the digital certificate from S server system 6 is received by the Send/Receive Certificate module, verified by the Certificate Verification module, and since the X client 1 already has the S EE Cert stored there is no need to keep multiple copies of the S EE Cert within the client's certificate storage and retrieval module. The X client 1 may also have digital certificates stored from previous exchanges with T server system 2 (according to Figs. 6a, 6b and 6c) and R server system 4 (according to Figs. 7a, 7b and 7c).

Figure 9b shows in the form of a diagram the subsequent response of X client system 1 after receiving S server system's digital certificate which is considered as another request to sign up for access to the server's services. The response of the X client system 1 need not be done while connected or online with the S server system 6. The X client system 1 may keep the sign up request to be acted upon at a later occasion considered convenient for the holder of the X client device 1. This facilitates maintenance of trust relationships that remain persistent to allow asynchronous exchange of information without the need for being online or connected sessions. This also allows client systems to use the same public key with different servers capable of acting as their own certificate authorities, in order to obtain various digital certificates containing information deemed identifying, pseudonymous or anonymous. This also allows server systems to accept different digital certificates from the same client regardless of whether the client reveals its identity, uses a pseudonym or anonymously when authenticating.

The public key store of the X client system 1 may have multiple public keys to which the X client system 1 also holds corresponding private keys. In response to the sign up request from S server system 6, X client system 1 sends its X2 public key along with identity information as a certificate signing request to the C CA system 7 (Fig. 9c). The certificate signing request is sent using a network connection. This would require the operator of the C CA system 7 to verify the identity of the holder of the X client system 1 using different methods, such as making a phone call or sending a message (sms or mms to their mobile phone, an electronic mail or even standard postal service mail). This would also permit the C CA system operator to record the holder's identifying information in a separate system or choose not to record such identifying information at all. This out of band verification of the holder's identifying information by the C CA operator would depend on the certificate authority's policy. The certificate authority's policy would also specify if it is permissible for the holder of the X client system 1 to leave out any identifying information in the certificate signing request, the policy would also specify if it is permissible to enter pseudonymous information in the certificate signing request. In either case, the C CA system 7 would issue and sign an X2 end entity digital certificate which contains verified identifying information for the X client system, or the C CA system 7 would issue and sign an X2 end entity digital certificate which is pseudonymous or anonymous for the X client system 1. The X2 end entity digital certificate will be stored in the X client system's certificate storage and retrieval module.

For X client system 1 to complete the sign up process for authenticated access to S server system 6, the X2 end entity digital certificate signed by C CA is sent to the S server system 6 and also stored within the device's certificate storage and retrieval module. This facilitates maintenance of trust relationships that remain persistent to allow asynchronous exchange of information without the need for being online or connected sessions. This allows client system 1 to use each public key with servers that are affiliated, with their own certificate authorities, in order to obtain various digital certificates containing information deemed identifying, pseudonymous or anonymous. This also allows server systems to accept different digital certificates from the same client regardless of whether the client reveals its identity, uses a pseudonym or anonymously when authenticating. The S server system 6 only needs to know that the X2 end entity digital certificate is trusted by the C CA system 7. Subsequent access by the X client system 1 to S server 6 is based on authentication using the X1 or X2 end entity digital certificate along with the T end entity digital certificate. This allows servers to act as the identity trust brokers for clients of their own services. It also prevents different servers from sharing any information, any identifying information or even passwords, about the clients they may have in common.

## Claims

1. Method for proving the authenticity of a client (1) to at least one server (2), comprising the steps of:
a) the server (2) sends a first certificate and a second certificate of the server to the client (1) as a sign up request, and
b) the client (1) responds by sending at least a certificate of the client together with identifying information to the server (2),
c) the server (2) signs and issues the signed certificate of the client depending on the validity of the identifying information.

2. Method according to claim 1, wherein the first certificate of the server contains information specifying which services the server (2) offers to the client (1).

3. Method according to claim 1 or 2, wherein the second certificate of the server contains information for the encryption or digital signing of the communication between server (2) and client (1).

4. Method according to one of the previous claims, wherein the first certificate of the server is a certificate of a certificate authority and the second certificate of the server is an end entity certificate.

5. Method according to one of the previous claims, wherein the client (1) has at least a pre-installed certificate which acts as a root to prove the authenticity of the server (2) to the client (1).

6. Method according to one of the previous claims, wherein the pre-installed certificate in the client (1) specifies operations which are of interest to the client when applying for a service to the server (2).

7. Method according to claim 6, wherein the operations specified by the pre-installed certificate in the client (1) include:
a confirm operation to perform RSA 1024 bit with SHA-1 digital signing or to perform equivalent combinations of cryptographic operations, and/or a buy operation to perform AES 256 bit encryption with AES key-wrap using RSA 1024 bit encryption in addition to RSA 1024 bit with SHA-1 digital signing or to perform equivalent combinations of cryptographic operations, and/or a transfer operation to perform AES 256 bit encryption with AES key-wrap using RSA 2048 bit encryption in addition to RSA 1024 bit with SHA-256 digital signing or to perform equivalent combinations of cryptographic operations, and/or a query operation to perform RSA 1024 bit with SHA-256 digital signing or to perform equivalent combinations of cryptographic operations, and/or some service specific operation performed using combinations of cryptographic operations.

8. Method according to one of the previous claims, wherein the certificate of the client signed by the server (2) in step c) is pseudonymous or anonymous or identity revealing for the client (1).

9. Method for proving the authenticity of a client (1) to at least one server in particular according to one of the previous claims, wherein the server (2) possesses at least a first own certificate and a second own certificate.

10. Method according to claim 9, wherein the client uses different own certificates to prove its authenticity for different services provided by one server.

11. Method according to claim 9 or 10, wherein the client (1) uses different own certificates to prove its authenticity to different servers (2, 4, 6).

12. Method according to one of the claims 9 to 11, wherein the client (1) uses different own certificates for anonymous, pseudonymous and identity revealing communication.

13. Method according to one of the previous claims, wherein the client (1) and the server (2) use a personal area network to prove the authenticity of the client to the server, wherein the personal area network can be chosen from the groups of wireless or wired personal area networks including Bluetooth, infrared, RS-232, USB, FireWire.

14. System for proving the authenticity of a client to at least one server, comprising at least one client (1) and one server (2) and a network connecting the client and the server, wherein the system uses the method for proving the authenticity of a client to at least one server according to one of the previous claims.

15. System according to claim 14, wherein the server (2) comprises a certificate authority sub-system (3).

16. Client system (1) including a certificate storage and retrieval part (160), wherein the client (1) uses the method according to one of the claims 1 to 13 to prove its authenticity to at least one server.

17. Server system (2) including a certificate storage and retrieval part and a certificate authority sub-system (3), wherein the server system (2) uses the method according to one of the claims 1 to 13 to prove an identity of a client (1).
